# EUROPÄISCHE PATENTANMELDUNG

(11) **EP 0 622 171 A1**
(43) Veröffentlichungstag der Anmeldung: **02.11.1994**
(21) Anmeldenummer: 94810224.9
(22) Anmeldetag: 22.04.1994
(51) Int. Cl.: B29C 65/34, H05B 3/58, F16L 47/02

(54) **Heizmittel für die flächenförmige Verschweissung von thermoplastischen Kunststoffen und Verfahren zur Herstellung desselben**

(30) Priorität: 27.04.1993 CH 1275/93
(71) Anmelder: Streng Plastic AG, CH-8155 Niederhasli (CH)
(72) Erfinder: Thalmann, Alfred, CH-8248 Uhwiesen (CH)
(74) Vertreter: Frei, Alexandra Sarah

(57) **Zusammenfassung**

Die Erfindung betrifft ein Flächenheizmittel aus thermoplastischem Kunststoff zum Herstellen von flächenförmigen Schweissverbindungen zwischen Formstücken durch Umsetzung von elektrischem Strom in Joulesche Wärme in Heizdraht und ein Verfahren zur Herstellung desselben, derart, dass in Zonen Rillen (15.1,75.1) eingearbeitet sind, dass ein oder mehrere Heizdrähte (16,76) darin eingebettet sind, sodass Heizzonen im Flächenheizmittel (18,78) ausgebildet sind und dass elektrischer Strom über Anschlussstellen (19,79) durch diese ein oder mehrere Heizdrähte (16,76) des Flächenheizmittels (18,78) fliessen kann.

## Beschreibung

Die Erfindung betrifft ein elektrisches Flächenheizmittel für die flächenförmige Verschweissung von Formstücken aus thermoplastischen Kunststoffen und ein Verfahren zur Herstellung solcher Flächenheizmittel aus Trägerkörpern und Heizleitern.

Flächenheizmittel werden zur Verbindung von Rohrleitungen und Rohrleitungsteilen sowie zur Erstellung von Abzweigleitungen unter Verwendung von beispielsweise Rohrsätteln und Anbohrschellen verwendet. Die für eine solche Flächenschweissung notwendige Wärme wird bei der sogenannten Heizwendelschweissung mittels einer, in der Fügezone eingebauten Heizdrahtwicklung oder Heizmatte, durch Joulesche Wärme erzeugt. Die Temperatur im verwendeten Heizdraht und an dessen Oberfläche wird durch mehrere Parameter, wie dem spezifischen Ohmschen Widerstand, dem Durchmesser und der Länge des Heizdrahts, sowie der Höhe der angelegten elektrischen Spannung, der Grösse des fliessenden Stroms und schliesslich durch den Wärmetransport über die Heizdrahtoberfläche in das zu schmelzende thermoplastische Material bestimmt.

Gegenwärtig auf dem Markt befindliche Flächenheizmittel für Kunststoffrohrleitungen sind vorrangig für den Einsatz in der Gasversorgung konstruiert, d.h. sie werden für Rohrleitungen von kleinen und mittleren Dimensionen verwendet. Beispielsweise weisen Abzweigleitungen aus Gasleitungen an Hausanschlüsse eher kleine Rohrdurchmesser auf. Dementsprechend klein sind die Verbindungen zu den grossen Hauptrohren der Gasversorgung, und Formstücke wie Rohrsättel und Anbohrschellen weisen somit kleine bis mittlere Bohrdurchmesser auf.

Kunststoffrohrleitungen und damit auch die Heizwendelschweisstechnik finden heutzutage mehr und mehr Einzug im Anlagenbau verschiedenster Einsatzgebiete, wie beispielsweise bei der Wasserversorgung. Diese Verschiedenheit der Anwendungsgebiete bedingt eine Nachfrage nach beispielsweise grösser dimensionierten Verbindungsformstücken für grössere Abzweigleitungen, als dies bis anhin bei der Gasversorgung der Fall war, aber sie bedingt auch eine Nachfrage nach flexibel einsetzbaren Formstücken.

Nun bedingt die Herstellung gross dimensionierter Abzweigleitungen wesentlich grössere Schweissflächen auf den äusseren Oberflächen grosskalibriger Haupt-Leitungsrohre. Diese Schweissflächen wachsen mit dem Quadrat des Rohrdurchmessers der Abzweigleitung und erfordern dementsprechend höhere elektrische Leistungen. Aus sicherheitstechnischen Gründen sind die höchstzulässigen Schweissspannungen jedoch auf rund 50 Volt begrenzt. Die für die Heizwendelschweissung notwendige Joulesche Wärme wächst also quadratisch mit der Schweissfläche, die vom Heizdraht gelieferte Joulesche Wärme wächst hingegen nur linear mit sinkendem Ohmschen Widerstand. Hieraus folgt, dass für gross dimensionierte Flächenheizmittel lange und dicke Heizdrähte mit dementsprechend niedrigen Ohmschen Widerständen verwendet werden müssen.

Bekannte Ausführungsarten solcher Heizdrahtwicklungen und Heizmatten haben daher die grundsätzlichen Nachteile von a) hohen Materialkosten, bedingt durch lange und und relativ dicke Heizdrähte und b) hoher Eigensteifigkeit und grossen Federkräften (Nachfederung beim Schmelzen des Einbettungsmaterials), bedingt durch die Dicke gebogener Heizdrähte. Die hohe Eigensteifigkeit erschwert nicht nur die konstruktive Gestaltung von Flächenheizmitteln und deren Montage auf der Baustelle, sie behindert auch den Schweissvorgang selbst. Die Eigensteifigkeit und die Federkräfte gebogener Heizdrähte lassen hierbei unberechenbare Drahtverschiebungen entstehen, wodurch sich einzelne, gebogene Windungsdrähte oder Drahtschlaufen gegenseitig berühren können und kurzgeschlossen werden, was zu örtlichen Kalt- und Heissstellen führt. Auch können beim Schweissvorgang unberechenbare radiale Biege- und Streckbewegungen gewölbter Drahtwendel stattfinden, welche die Wärmezufuhr aus der Fügezone hinaus in die Rohrwand oder in den Formteilkörper verlagern. Derart gestörte Schweissverbindungen bergen ein erhebliches Risiko an Schweissfehlern und können unmittelbar Undichtigkeit sowie verminderte Langzeiteigenschaften zur Folge haben.

Neben diesen hier aufgezählten Schwierigkeiten bekannter Heizdrahtwicklungen und Heizmatten bezüglich der Dimension der Schweissflächen weisen sie den Nachteil auf, dass Form und Flächenausdehnung der verschweissungsfreien Zonen der Formstücke wie beispielsweise Rohrsättel und Anbohrschellen nicht frei wählbar sind. So sind Produkte auf dem Markt, bei denen man in Kauf nimmt, dass einzelne Heizdrähte mechanisch durchschnitten werden, wenn nach dem Schweissvorgang das Hauptrohr im Bereich der Anbohrschelle zur Herstellung einer Rohrverbindung angebohrt wird. Dies erfordert nicht nur einen unerwünscht hohen Kraftbedarf, sondern erschwert auch eine nachträgliche Kontrolle oder Reparatur der Rohrverbindung und verunmöglicht ein eventuelles Nachschweissen.

In der Schweizer Patentschrift CH 5705577 wird ein rechteckiges, ganzflächiges Heizmittel für annähernd rohrumfassende Schweissung beschrieben, welches aus mäanderförmig aneinandergereihten, kunststoffbeschichteten Heizdrähten besteht. Nebst dem Nachteil des hohen Drahtbedarfs und dem für solch grosse Schweissflächen notwendigen dicken, steifen und teuren Heizdraht, besteht ein weiterer Nachteil darin, dass die Heizdrähte für eine Anbohrung im Bohrbereich durchtrennt werden müssen.

In den Europäischen Patentschriften EP 0119061 und EP 0160536 werden kreisrunde Flächenheizmittel mit spiralförmig verlaufenden Heizspiralen beschrieben. Das eine, sich am äussersten Umgang befindliche Heizdrahtende kann problemlos an ein Kontaktelement angeschlossen werden. Das andere, sich am innersten Umgang befindliche Heizdrahtende hingegen, muss sämtliche Drahtspiralen traversieren um nach aussen geführt zu werden, wo es seinerseits an ein Kontaktelement angeschlossen wird. Ein Nachteil dieser Flächenheizmittel besteht darin, dass obwohl der traversierende Heizdraht mit einer Sicherheitsdistanz zu den Drahtspiralen geführt wird, ein erhebliches Kurzschluss-Risiko während des Schweissvorgangs trotzdem bestehen bleibt. Dies rührt daher, dass das isolierende thermoplastische Material im ganzen Bereich der Heizspirale bewusst in den Schmelzezustand -- als Schweisszone -- überführt wird wobei die Immobilisierung der einzelnen Heizleiteranteile, und somit auch die Sicherheitsdistanz, weitgehend verloren geht.

Eine Verbesserung bezüglich dieser Kurzschlussgefahr während des Schweissvorgangs wird in der Europäischen Patentschrift EP 0184658 beschrieben. Diese Verbesserung besteht darin, dass eine Heizspirale auf einer Fläche eines Verbindungsformstücks von aussen nach innen gewickelt, am innersten Umgang durch das Verbindungsformstück hindurchgeführt und auf einer zweiten Fläche dann von innen nach aussen gewickelt wird. Nebst dem technisch schwierig auszuführenden Durchführen des Heizdrahts im zentralen Bereich eines Verbindungsformstücks, benötigt diese Anordnung, verglichen mit einer Einfachspirale, die doppelte Menge Heizdraht. Zudem entstehen zwei, voneinander abhängige Schweissflächen und verdoppeln damit das Risiko eines Schweissfehlers im funktionskritischen Fügebreich. Für grosse Schweissflächen eignet sich dieses Vorgehen nicht.

Die Aufgabe der vorliegenden Erfindung ist es, Flächenheizmittel mit niedrigen Kurzschlussrisiken, zum flächenförmigen Verschweissen von Formstücken aufzuzeigen und ein Verfahren zur Herstellung derselben in verschiedenen Ausführungsformen bezüglich Form und Grösse anzugeben Diese Flächenheizmittel sind somit zum Verbinden von Kunststoffrohrleitungen einsetzbar, sie sollen vollflächig verschweissbar sein und sollen anwendungsspezifisch verschweissungsfreie Teilflächen aufweisen können. Diese Flächenheizmittel sollen neben guter Kurzschlussfestigkeit eine zusätzliche konstruktionsbedingte Minimierung der Kurzschlussauswirkungen beim Schweissvorgang aufweisen, d.h. im Falle einer (trotz allem sich ereignenden) Berührung zweier Heizdrähte wird nur ein Minimum des gesamten Heizdrahtwiderstands überbrückt, wodurch nur ein Minimum an Heizleistung ausgeschaltet wird. Das Flächenheizmittel soll so konstruiert sein, dass sich eine Mehrzahl unterschiedlich dimensionierter Formstücke miteinander verbinden lassen. Es soll homogenene Wärmefelder (gleiche Heizbereiche) und gezielt inhomogene Wärmefelder (verschiedene Heizbereiche) in Heizzonen aufweisen können. Es soll Trägermaterial oder Formstücke für Heizelemente verwenden, die nach dem Schweissen Teil der definitiven Fügezone sind, und die so ausgewählt werden, dass die Schweissung optimale Eigenschaften aufweist.

Erfindungsgemäss wird dies durch die in den Patentansprüchen angegebene Erfindung gelöst. Besonders vorteilhafte Ausgestaltungen der Erfindung sind in den abhängigen Patentansprüchen gekennzeichnet.

Die erfindungsgemässe Lösung basiert auf Überlegungen, dass ein bisher als funktionelle Einheit konzipiertes und dementsprechend hergestelltes Verbindungsformstück samt Heizmittel für Flächenverschweissungen auf seine elementaren topologischen Objekte und auf seine elementaren elektrischen Komponenten reduziert werden kann. Eine solche Reduktion führt zu einer neuartigen Vorstellung eines Flächenheizmittels, nämlich dass aus aufeinander abgestimmten elementaren Formstücken, Flächenheizmitteln für Verbindungsformstücke gebildet werden.

Diese Abkehr vom Prinzip des einheitlich hergestellten Verbindungsformstücks, sozusagen aus einem Guss, und die Abkehr vom Prinzip der einheitlich geführten Heizdrahtwicklung, führen zum erfindungsgemässen Flächenheizmittel und zum erfindungsgemässen Verfahren zur Herstellung desselben. Das Verfahren dient zur technisch einfachen Herstellung eines Flächenheizmittels, welches entweder aus mehreren aufeinander abgestimmten Heizelementen mit Heizdrähten und Heizzonen zur Bildung einer Heizmatte besteht oder welches aus dem Einlegen von Heizdrähten in Rillen direkt in die Formstükke besteht, wodurch direkt in den Formstücken Heizzonen gebildet werden, sodass die Formstücke aus sich heraus beheizt werden. Die Heizdrähte eines jeden dieser Heizelemente können aus dem gleichen oder aus verschiedenem Material sein, sie können gleich lang oder gleich dick oder unterschiedlich lang oder dick sein etc. Die Tragkörper oder Formstücke, auf denen die Heizdrähte angebracht werden können frei geformt sein, sie sind beispielsweise geometrische Objekte niedriger topologischer Ordnung (nullter Ordnung). Hieraus resultiert eine grosse Freiheit bei der Wahl der Zusammensetzung von Formstücken zur Bildung einer unter Umständen Vielzahl unterschiedlicher Verbindungsformstücke aus elementaren Formstücken und Flächenheizmitteln. Die Heizmatten bestehen aus mehreren identisch oder verschieden gearbeiteten Heizelementen. Die Heizmatten oder aus sich beheizten Formstücke können nach dem Muster elektrischer Schaltungen (in Serie oder parallel) zu Flächenheizmitteln verbunden werden und so Heizmatten mit homogenen oder inhomogenen Wärmefeldern (Heizzonen) bilden. Die daraus entstehende Flexibilität bezüglich Anwendungen ist praktisch unabsehbar.

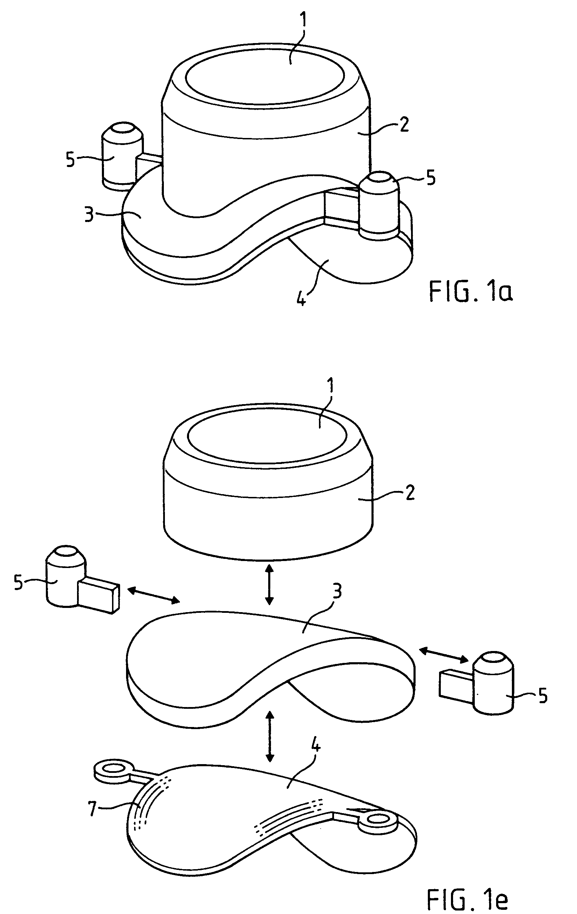

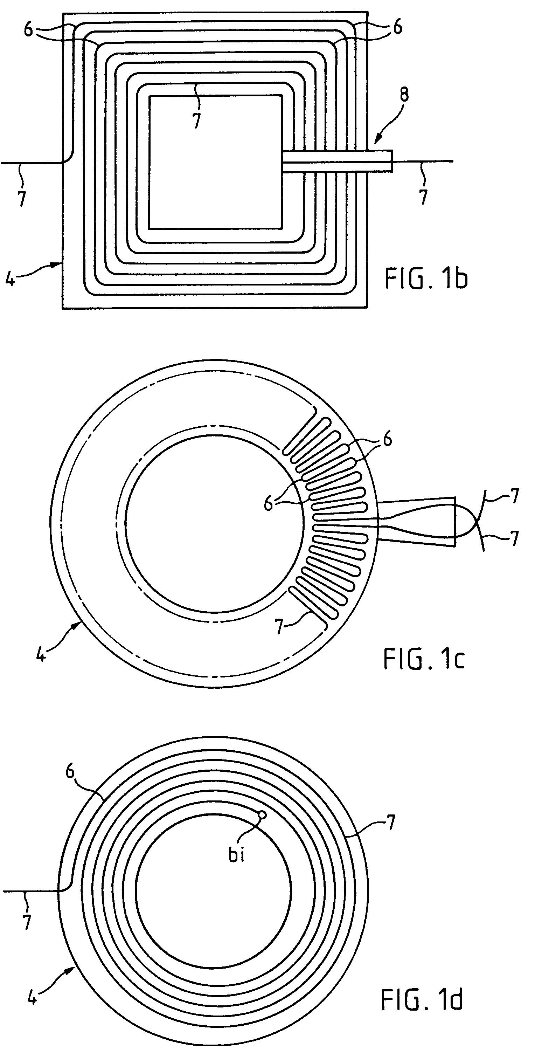

Anhand der nachfolgend aufgeführten Figuren werden das erfindungsgemässe Flächenheizmittel und das Verfahren zur Herstellung desselben erläutert und es werden bevorzugte Ausführungsformen derselben im Detail beschrieben. Anhand der Figuren 1a bis 1e wird als einführende Basis kurz der engere Problemkreis des aktuellen Standes der Technik angeschnitten.
- Fig. 1a: zeigt aus dem Stand der Technik einen Rohrsattel zum Verbinden zweier Kunststoffrohre unterschiedlicher Durchmesser.
- Fig. 1b: zeigt eine bekannte Ausführungsform des Heizdrahtverlaufs in der Heizmatte zur Verwendung gemäss Figur 1a, bei der die Heizdrahtenden eine Sicherheitsdistanz zueinander aufweisen.
- Fig. 1c: zeigt eine andere bekannte Ausführungsform des Heizdrahtverlaufs in der Heizmatte zur Verwendung gemäss Figur 1a, bei der die Heizdrahtenden keine Sicherheitsdistanz zueinander aufweisen.
- Fig. 1d: zeigt eine weitere bekannte Ausführungsform des Heizdrahtverlaufs in der Heizmatte zur Verwendung gemäss Figur 1a, bei der die Heizdrahtenden durch Durchführen des einen von beiden durch ein Loch sich auf verschiedenen Seiten der Heizmatte befinden.
- Fig. 1e: zeigt den Rohrsattel gemäss Figur 1a in seine geometrischen Komponenten zerlegt.
- Fig. 2a: zeigt eine erste vorteilhafte Ausführungsform eines Tragkörpers in Form einer halbringförmigen Trägerplatte, als ein Halbzeug für eine erste Ausführungsform eines erfindungsgemässen Flächenheizmittels mit einer vorgezeichneten verschweissungsfreien Zone.
- Fig. 2b: zeigt ein auf eine Seite der Trägerplatte gemäss Figur 2a geschnittenes Rillenbild zum Einlegen von Heizdraht.
- Fig. 2c: zeigt eine erste Ausführungsform eines Heizelements, die durch Einlegen von Heizdraht in eine Trägerplatte gemäss Figur 2b hergestellt wird.
- Fig. 2d: zeigt zwei Heizelemente gemäss Figur 2c, die derart zusammengesetzt eine erste Ausführungsform eines erfindungsgemässen Flächenheizmittels mit einer zentralen schweissungsfreien Zone bilden.
- Fig. 3a: zeigt eine zweite Ausführungsform eines Heizelements, mit geschnittenem Rillenbild und darin eingebettetem Heizdraht.
- Fig. 3b: zeigt vier Heizelemente gemass Figur 3a, die derart zusammengesetzt eine zweite Ausführungsform eines erfindungsgemässen Flächenheizmittels mit einer zentralen schweissungsfreien Zone bilden.
- Fig. 4a: zeigt eine dritte bevorzugte Ausführungsform eines Heizelements, mit geschnittenem Rillenbild und darin eingebettetem Heizdraht.
- Fig. 4b: zeigt zwei Heizelemente gemäss Figur 4a, die derart zusammengesetzt eine dritte Ausführungsform eines erfindungsgemässen Flächenheizmittels mit einer zentralen schweissungsfreien Zone bilden, wobei auch diese Form, ähnlich der in Figur 3 gezeigten Weise, zusammengesetzt sein kann.
- Fig. 5a: zeigt eine vierte bevorzugte Ausführungsform eines Heizelements, mit geschnittenem Rillenbild und darin eingebettetem Heizdraht.
- Fig. 5b: zeigt zwei Heizelemente gemäss Figur 5a, die derart zusammengesetzt eine vierte Ausführungsform eines erfindungsgemässen Flächenheizmittels mit einer zentralen schweissungsfreien Zone bilden, wobei auch diese Form, ähnlich der in Figur 3 gezeigten Weise, zusammengesetzt sein kann.
- Fig. 6a: zeigt eine fünfte bevorzugte Ausführungsform eines Heizelements, mit geschnittenem Rillenbild und darin eingebettetem Heizdraht.
- Fig. 6b: zeigt zwei Heizelemente gemäss Figur 6a, die derart zusammengesetzt eine fünfte Ausführungsform eines erfindungsgemässen Flächenheizmittels ohne zentraler schweissungsfreier Zone bilden.
- Fig. 6c: zeigt eine Mehrzahl von Heizelementen gemäss Figur 6a in paralleler Zusammenschaltung zu einer beliebig grossen Heizmatte, wobei an den Kontaktstellen P gleichen elektrischen Potentials eventuelle Kontakte keinen Einfluss auf die Heizleistung des einzelnen Elements haben. Die Parallelschaltung solcher Heizelemente verhält sich wie die Parallelführung der Vielzahl von unisolierten Drähten bzw. Leitern eines Litzenkabels, die untereinander elektrisch in Kontakt sind, ohne die Leitcharakteristik des einzelnen Leiters in der Litze zu beeinflussen.
- Fig. 7a: zeigt eine sechste bevorzugte Ausführungsform eines Heizelements, in Draufsicht mit geschnittenem Rillenbild und darin teilweise eingebetteten Heizdrähten, dass gleichzeitig eine sechste Ausführungsform eines erfindungsgemässen Flächenheizmittels mit einer zentralen schweissungsfreien Zone bildet.
- Fig. 7b: zeigt einen perspektivischen Schnitt AA' gemäss Figur 7a, mit geschnittenem Rillenbild und darin teilweise eingebetteten Heizdrähten und mit einer vorgezeichneten verschweissungsfreien Zone. Teilweise eingebettet sind die Heizdrähte deshalb, weil sie in den Wendebereichen an die Oberfläche des Heizelements herausreichen.
- Fig. 7c: zeigt einen vergrösserten perspektivischen Schnitt BB' gemäss Figur 7a, mit geschnittenem Rillenbild und darin teilweise eingebetteten Heizdrähten und mit einer vorgezeichneten verschweissungsfreien Zone. In dieser Ansicht wird ersichtlich, wie die Heizdrähte vorteilhaftweise in den Wendebereichen aus der Oberfläche des Heizelements hervorstehen.
- Fig. 7d: zeigt eine siebte bevorzugte Ausführungsform eines Flächenheizmittels nach Einpressen und Einschmelzen der hervorstehenden Wendebereiche der Heizdrähte direkt in ein Formstück und mit einer vorgezeichneten verschweissungsfreien Zone. Dieses Flächenheizmittel weist die komplexe Geometrie des zu verbindenden (nicht weiter abgebildeten) Formstücks auf.

Zur Diskussion des Standes der Technik ist in den **Figuren 1a bis 1e** ein Beispiel aus den Europäischen Patentschriften EP 0119061 und EP 0184658 für die Verbindung eines Rohrsattels zweier Kunststoffrohre unterschiedlicher Durchmesser ausgewählt.

In **Figur 1a** ist ein Rohrsattel zu sehen, welcher ein an einen Sattel 3 angeformtes Rohrstück 2 mit kreiszylindrischer Öffnung 1 aufweist. An der auf einer Oberfläche des Sattels geführten Heizmatte 4 sind seitlich zwei elektrische Kontakten 5 angebracht. Ein Rohrsattel weist eine recht komplexe Geometrie auf. So sind der Sattel 3 und die Heizmatte 4 entsprechend dem Aussendurchmesser des zu verbindenden (nicht abgebildeten) grösseren Kunststoffrohrs geformt, eine solche Formung muss aufgrund der Zahl der verwendeten Teile bei der Herstellung des Rohrsattels im Werk vorgenommen werden. Beispielsweise findet die Führung des Heizdrahts und die elektrische Kontaktierung der Heizmatte 4 in mehreren Ebenen statt. Dies ist in den Figuren 1b bis 1d zu sehen.

In den **Figuren 1b** bis **1d** sind drei verschiedene Ausührungen des Heizdrahtverlaufs zu sehen, bei denen immer gekrümmte Bereiche 6 auftreten, d.h. in denen der einheitlich geführte Heizdraht 7 seine Raumorientierung ändert. Aufgrund der Länge des gewickelten Heizdrahts 7, speziell für eine grosse Schweissfläche, muss dieser Heizdraht 7 eine gewisse Dicke aufweisen um einen niedrigen Ohmschen Widerstand zu besitzen, er ist daher relativ starr. Die Herstellung solcher Heizmatten 4 ist mit Aufwand verbunden, da die mechanische Wicklung des Heizdrahts 7 auf den Heizmatten 4 kompliziert verläuft, gerade in Bereichen mit Raumorientierungänderungen des Heizdrahts 7 müssen beim Wickelvorgang der Heizdraht 7 und die Heizmatte 4 bewegt werden, ein Vorgang der auch Kosten verursacht. In Figur 1b wird der Heizdraht 7 in zwei Ebenen geführt, die Heizdrahtenden befinden sich in einer Sicherheitsdistanz zueinander. In der einen Ebene wird der Heizdraht 7 von aussen nach innen gewickelt, um dann am innersten Umgang in der zweiten Ebene im gekreuzten Bereich 8 wieder nach aussen geführt zu werden. Der Heizdraht 7 weist gekrümmte Bereiche 6 auf, wo er seine Raumorientierung in einer Ebene um 90° ändert. In der Ausführungsform gemäss Figur 1c weist der Heizdraht 7 stark gekrümmte Bereiche 6 auf, in denen er seine Raumorientierung in einer Ebene um 180° ändert. Diese Ausführungsform weist keine Sicherheitsdistanz der Heizdrahtenden zueinander auf. Die Verwendung solcher, für eine grosse Schweissfläche verwendeter, langer, dicker und daher starrer Heizdrähte 7 der Heizmatte 4 im Rohrsattel gemäss Figur 1a ist daher mit Schwierigkeiten behaftet. Die Gefahren unberechenbarer Heizdrahtverschiebungen beim Schweissvorgang, hervorgerufen durch die existierenden Biegespannungen der Heizdrähte 7 in den gekrümmten Bereichen 6, welche dann zu heissen Stellen aufgrund zu dicht beieinander liegender Heizdrähte und schliesslich zum teilweisen oder vollständigen Kurzschluss führen, sind aufgrund der Führung der Heizmatte 4 beträchtlich. Schliesslich wird in der Ausführungsform gemäss Figur 1d dieses Problem umgangen, indem der Heizdraht durch ein Loch bi im Träger auf die andere Seite geführt und so die Enden kurzschlusssicher voneinander getrennt sind. Das Durchfädeln des Heizdrahtes durch eine Oeffnung ist indessen eine unerwünschte, vermeidbare Massnahme.

In **Figur 1e** sieht man den Rohrsattel gemäss Figur la in mehrere einfache geometrische Objekte zerlegt. Der Rohrsattel kann so als aus einem Rohrstück 2 mit kreiszylindrischer Öffnung 1, dem eigentlichen Sattel 3, der Heizmatte 4 und den zwei elektrischen Kontakten 5 zusammengesetzt angesehen werden. Das Problem der potentiellen Kurzschlussgefahr aufgrund der verwendeten Heizmatten 4 wird dabei nicht gelöst. Auch werden die Montage und das Herstellungsverfahren nicht vereinfacht. Gesucht wird daher eine neuartige geometrische Reduzierung von beispielsweise an einem solchen Rohrsattel veerwendeten Heizelemente in einfache geometrische Objekte, verbunden mit einem neuartigen Konzept eines Flächenheizmittels. Die geometrische Reduzierung wird bspw. schon am Reissbrett vorgenommen, in dem dort die gewünschten Wärmefelder eingegrenzt und entsprechende Tragkörper für die Heizwicklung bestimmt werden. Diese können in der ermittelten Passform als Halbzeug vorfabriziert und an Lager gelegt werden. Vorteilhaft ist es, standardisierte Formen zu finden und bereit zu halten, die dann mit den gewünschten Heizleistungen versehen werden können. Am Rohrsattelbeispiel wird dies in den folgenden Figuren schrittweise vorgestellt.

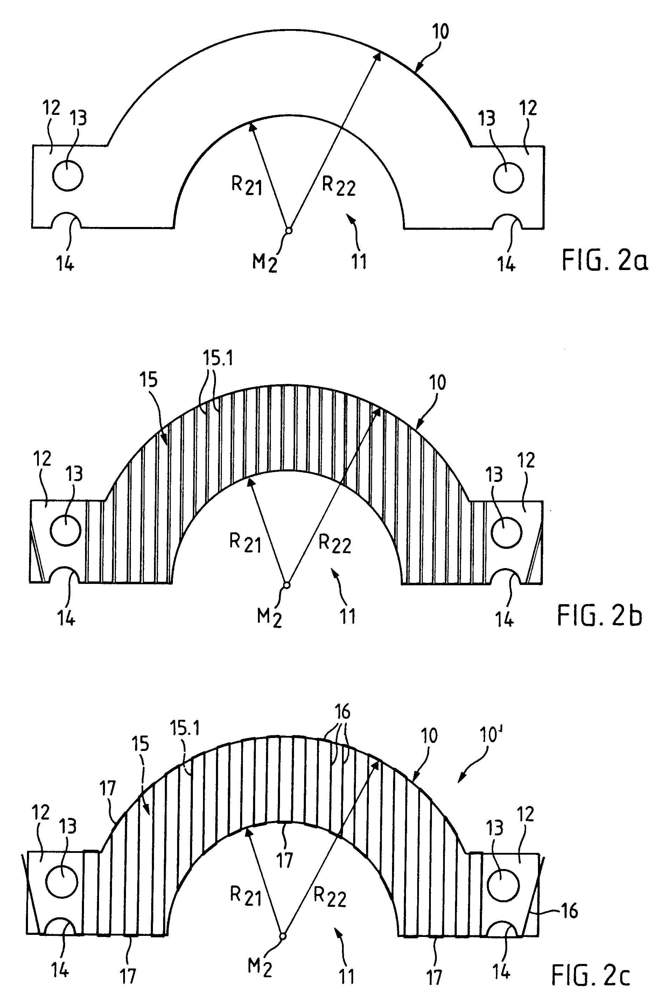

**Figur 2a** zeigt eine erste vorteilhafte Ausführungsform eines Tragkörpers in Form einer halbrunden Trägerplatte als Halbzeug zum Herstellen solcher Flächenheizmittel mit einer zentralen, halbkreisförmigen verschweissungsfreien Zone 11 mit Radius R₂₁ bezogen auf den Zentralpunkt M₂ (ringförmiges Wärmefeld). Die Trägerplatte 10 besteht aus elektrisch isolierendem thermoplastischem Kunststoff, sie kann eben oder räumlich gekrümmt sein. Beispielsweise kann eine ebene Trägerplatte als Teil eines Sattel dienen, hierzu muss sie den Aussendurchmesser eines zu verbindenden (nicht abgebildeten) grösseren Kunststoffrohrs annehmen, dies kann beispielsweise durch Anpressen auf die Aussenwandung eines solchen Rohr geschehen. Diese Anpassung kann in jedem Stadium der Herstellung des Flächenheizmittels, also auch noch bei einer abschliessenden Montage auf einer Baustelle erfolgen. Die Trägerplatte 10 besteht im wesentlichen aus einem kreiszylindrischen Halbring konstanter Breite, der (bezogen auf den Zentralpunkt M₂), von zwei Halbkreisen mit innerem Radius R₂₁ und äusserem Radius R₂₂ begrenzt wird. Ferner weist die Trägerplatte 10 zwei Ansätze 12 mit zwei kreisförmige Öffnungen 13 und zwei halbkreisförmige Einformungen 14 auf. Die Öffnungen 13 dienen zum Halten, Fixieren und Befestigen der Trägerplatte. Die Dicke der Trägerplatte 10 ist frei wählbar, vorteilhaft sind Dicken von 150 bis 500% des einzulegenden Heizdrahtdurchmessers. Man kann auch flexible, also aus der Ebene biegbare Trägerplatten vorsehen, womit auf den Heizdraht eine definierte Vorspannung gegeben werden kann, in welcher Vorzugsrichtung er sich beim Schmelzen des Umgebungsmaterials bewegt, bspw. um die Gefahr der gegenseitigen Berührung einzelner Heizdrahtschlaufen während des Flächenschweissens herabzusetzen.

**Figur 2b** zeigt ein in Zonen auf der Trägerplatte 10 gemäss Figur 2a geschnittenes Rillenbild 15 zum Einlegen von Heizdraht. Dieses Rillenbild 15 besteht aus geschnittenen Rillen 15.1 auf der Trägerplatte 10. Das Rillenbild 15 kann auf einer oder auf beiden Seitenflächen von grösster flächiger Ausdehnung der Trägerplatte 10 verlaufen. Diese Zonen werden im folgenden Hauptflächen genannt. Insbesonders im Bereich des kreiszylindrischen Halbrings, des späteren Flächenschweissbereichs des Heizdrahts, verlaufen die Rillen 15.1 als eine Schar paralleler und in einer Ebene betrachtet, im gleichen Abstand zueinander angeordneter Vertiefungen. Diese Vertiefungen weisen ein Drahtnest mit Durchmesser des in sie einzulegenden Heizdrahts auf. Im Bereich der Ansätze 12 verlaufen die Rillen 15.1 nicht parallel zueinander, dies geschieht, um den später einzulegenden Heizdraht leicht spannen zu können. Der Einlegevorgang des Heizdrahts kann mit geeigneten Werkzeugen vollautomatisch geschehen. Durch frei programmierbare, koordinatengesteuerte Bewegung des Werkstücks oder des Werkzeughalters werden solche lagemässig vorbestimmte Rillen 15.1 gemäss dem Entwurf im Rillenbild 15 in definierter Tiefe geschnitten. Sie lassen sich mit beispielsweise axial drehbaren Werkzeugen einfach, rasch, präzise und kostengünstig herstellen.

**Figur 2c** zeigt die Trägerplatte 10 gemäss Figur 2b mit eingebettetem Heizdraht 16, wodurch eine erste Ausführungsform eines Heizelements 10' gebildet wird. Der Heizdraht 16 ist einheitlich eingelegt, er besteht aus einem Stück, er ist dünn und daher nicht starr und verläuft entweder in einer Ebene auf der Vorderseite des Heizelements 10' (nur auf einer Hauptfläche) oder in mehreren Ebenen auf der Vorder- und Rückseite des Heizelements 10' (also auf beiden Flächenseiten). An den Enden der einzelnen Rillen 15.1 wird der Heizdraht 16 von einer Rille 15.1 zur nächsten, angrenzenden Rille 15.1 geführt. In diesen Wendebereichen 17 ändert der Heizdraht 16 seine Raumorientierung um zweimal 90°. Der Heizdraht 16 wird schlaufenförmig in die Rillen 15.1 eingelegt. Im Falle einer Verlegung des Heizdrahts 16 in mehreren Ebenen auf Vorder- und der Rückseite des Heizelements 10' wechselt er bei diesen Wendebewegungen seine Ebene, dies kann regelmässig oder unregelmässig geschehen. Die Wendebewegungen des Einlegewerkzeugs, beispielsweise einer Einlegschneide, wie auch des Drahteinlegewerkzeugs werden entweder ausserhalb der Begrenzungskanten der Trägerplatte oder innerhalb von freigestellten Aussparungen durchgeführt. Auf den beiden Ansätzen 12 wird der Heizdraht 16 über die Seitenflächen der halbkreisförmigen Einformungen 14 gezogen. Dies geschieht um hier später elektrische Kontaktierungen vornehmen zu können. Dieser Einlegevorgang ist unkompliziert und kann mit geeigneten und bekannten Einlegewerkzeugen einfach vollzogen werden, auch deshalb, weil der Heizdraht 16 dünn und flexibel ist.

Was also den verwendeten Heizdraht 16 von solchen Heizdrähten aus bekannten Heizmatten unterscheidet, sind sein geringer Durchmesser, seine frei bestimmbare Länge und die grosse Freiheit ihn in ein Rillenbild in einer oder mehrenen Ebenen einzulegen. Der Durchmesser des Heizdrahts 16 ist kleiner als bei bekannten Heizdrähten, beispielsweise wie derjenige in den drei Ausführungsformen von bekannten Heizmatten 4 gemäss den Figuren 1b, 1c und 1d. Heizdrähte mit kleinen Durchmessern haben eine geringe Eigensteifigkeit, sie sind weniger starr. Sie bilden daher nach dem Einlegen in den thermoplastischem Kunststoff geringere Biege- und Federkräfte, die dann beim Flächenschweissvorgang zu unerwünschten Biege- und Streckbewegungen führen. Die potentielle Kurzschlussgefahr, welche mit beispielsweise Heiss- und Kaltstellen der Flächenschweissung verbunden ist, wird also unter anderem durch Verwendung dünner Heizdrähte vermieden. Ausserdem kann durch eine Krümmung in der Fläche eine Vorspannung eingebracht werden, welche beim Schmelzen des Tragkörpers die Heizschlaufen gleichsam auffächert, das heisst, sie haben die Tendenz sich voneinander zu entfernen. Die Heizdrähte können materialspezifisch ausgewählt werden, sodass der Widerstand des verwendeten Heizelements 10' den erforderten Gegebenheiten frei angepasst werden kann.

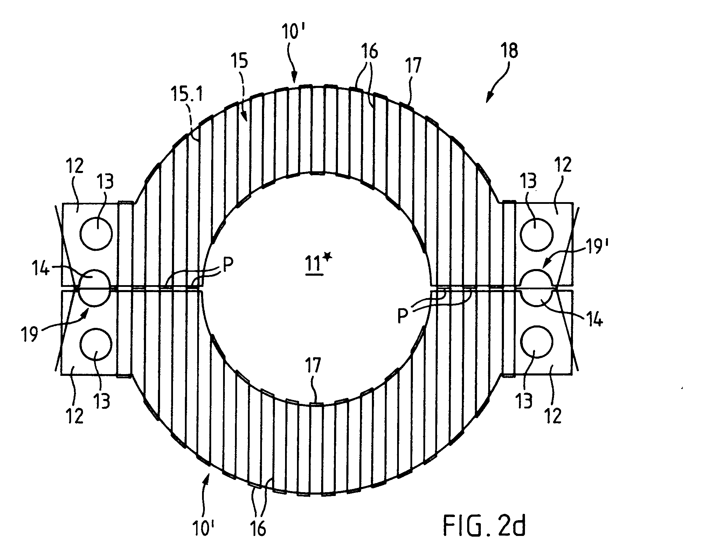

**Figur 2d** zeigt zwei Heizelemente 10' gemäss Figur 2c, derart zusammengesetzt, dass sie ein Flächenheizmittel 18 mit einer zentralen, kreisförmigen schweissungsfreien Zone 11 bilden. Hierbei handelt es sich um eine erste beispielhafte Ausführungsform eines erfindungsgemässen Flächenheizmittels. Dieses Flächenheizmittel 18 kennzeichnet sich durch einen dünnen und flexiblen Heizdraht 16 mit einem niedrigeren Ohmschen Widerstand, als bei solchen Heizdrähten aus bekannten Heizspiralen oder Heizmatten. Das Flächenheizmittel ist aufgrund des verwendeten dünnen und flexiblen Heizdrahts ebenfalls flexibel, es passt sich somit einfach der Geometrie einer ebenen oder gewölbten Formpartie wie beispielsweise einer gekrümmten Rohrwandung an. Ein erfindungsgemässes Flächenheizmittel kann aber auch zu einem beliebig geformten Verbindungsformstück weiterbearbeitet werden, hierfür wird es je nach späterem Verwendungszweck mit geeigneten Spannmitteln, beispielsweise mittels Vakuum (Ansaugen), auf den Arbeitstisch einer Spezialmaschine flach oder in einer vorab gegebenen Form aufgespannt.

Erfindungsgemäss setzt sich das Flächenheizmittel 18 aus mindestens zwei getrennt auf den beiden Heizelementen 10' geführten Heizdrähten 16 zusammen, die nach bekannten Schaltungsmustern der Elektrotechnik, vorzugsweise parallel oder in Reihe und kombiniert, d.h. parallel und in Reihe verschaltet werden. Bei Verschaltung in Reihe kann kein blanker Heizdraht 16 verwendet werden, sondern er muss versiegelt, beispielsweise lackisoliert sein. Die Heizdrähte 16 der zusammengesetzten Heizelemente 10' können sich in den Wendebereichen 17, den mit P bezeichneten Kontaktstellen berühren, und können so elektrische Kontakte herstellen. Bei paralleler Verschaltung haben die Kontaktstellen P jedoch gleiches Potential, was bei einem elektrisch leitenden Kontakt keinen Einfluss auf die Energieeinbringung hat. Der elektrisch leitende Kontakt an den Kontaktstellen P kann bei Parallelschaltung der Elemente ausserdem gezielt zur Leistungsverzweigung zwischen Elementen mit verschiedener Heizleistung herangezogen werden.

Diese Massnahme der Leistungsverzweigung wird weiter unten im Zusammenhang mit anderen Figuren noch diskutiert. Das wesentliche daran ist, dass elektrische Leiterbereiche (Drahtbereiche), die gemäss Stand der Technik zur Vermeidung von Kurzschlüssen distant auseinandergehalten wurden, in unkritischer Organisation, indem nur Kontakte zwischen gleichen elektrischen Potentialen (Spannungen) möglich sind, nun kurzgeschlossen werden können und, falls verschiedene Heizleistungen so zusammengebracht werden, eine Leistungsverzweigung möglich ist.

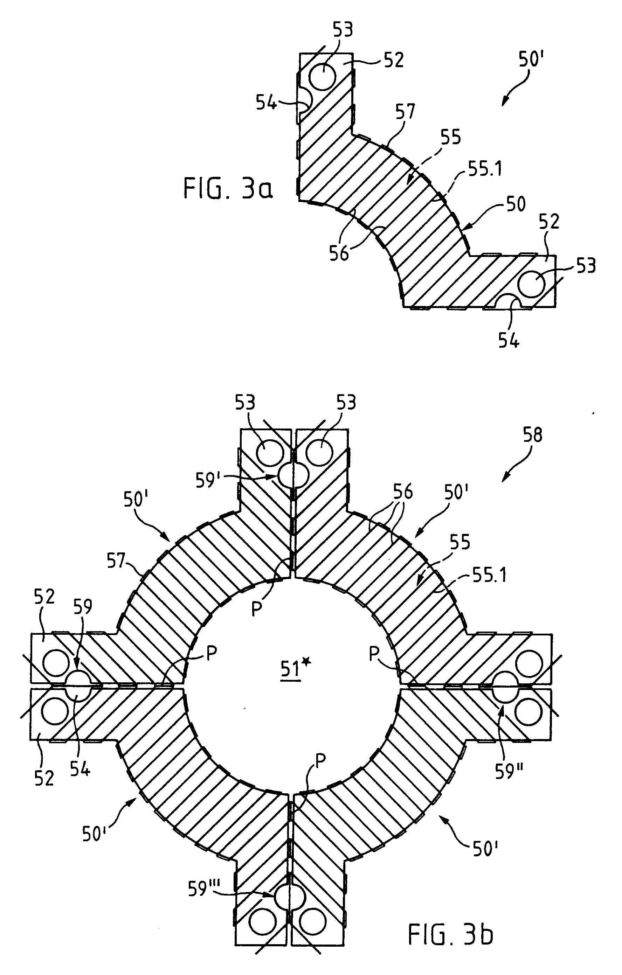

Diese Heizmatte setzt sich aus mindestens zwei Heizelementen 10' zusammen. Der zum Verschweissen notwendige elektrische Strom wird den Heizdrähten 16 über die Anschlussstellen 19,19' (gebildet aus den halbkreisförmige Einformungen 14 und dem eingebetteten Heizdraht 16 verschiedener aneinandergrenzender Heizelemente) zugeführt. Die Einformungen 14 und der eingebettete Heizdraht 16 aneinandergrenzenden Heizelemente 10' können daher zusammenfallen oder nicht. Die beiden Heizdrähte 16 der zwei aneinandergefügten Heizelemente 10' der ersten Ausführungsform eines Flächenheizmittels 18 berühren sich in den beiden Anschlusstellen 19,19' und bilden demnach eine Parallelschaltung, wodurch (im Gegensatz zur Figur 1c) die Anschlüsse weit auseinanderliegen, was den 100%-Kurzschluss völlig vermeidet. Bei Anlegen von elektrischem Strom fliesst dieser gleichzeitig durch beide Heizelemente 10'. Fallen nur zwei aneinandergrenzende Einformungen 14 zweier aneinandergefügter Heizelemente 10' zu einer Anschlussstelle 19 zusammen, so wird über sie eine Reihenschaltung konstruiert. Hierbei fliesst der elektrische Strom dann nacheinander durch die Heizdrähte 16 der Heizelemente 10'. Erfindungsgemäss können natürlich auch mehr als zwei Heizelemente mit entsprechender Geometrie zum Bilden eines Flächenheizmittels zusammengefügt werden. Bei Zusammenfügen von mehr als zwei Heizelementen zu einem Flächenheizmittel können demnach auch mehrere solcher Kontaktstellen gebildet werden und es können, durch den Konstrukteur frei wählbar, jeweils lokal, mit den Heizelementen Reihen- oder Parallelschaltungen gebildet werden (siehe Figur 3).

Das Trägermaterial ist nach der Verschweissung homogener Bestandteil der fertigen Trägerzone. Grundvoraussetzung für die Materialwahl dieser Trägerplatte ist die Schweisskompatibilität mit den zu verschweissenden Körpern. Mit gezielter Auswahl des Werkstoffes für die Trägerplatten auf die zu verschweissenden Teile, bzw. deren Werkstoffe (z.B. Polyäthylen verschiedener Typen) kann die Güte der fertigen Schweissung durch Auswahl des Trägerplattenmaterials mit kompensierenden Eigenschaften (z.B. bezüglich Fittingmaterial und Rohrmaterial) gezielt ausgewählt werden.

Zur Verminderung der Kurzschlussauswirkungen beim Schweissen durch unerwünschte Kontaktierungen sich berührender Heizdrahtbereiche beim Schmelzen des thermoplastischen Kunststoffs infolge Hitzeentwicklung in den Heizdrähten, ist das Layout, der Schaltungsentwurf der elektrischen Schaltung und die Drahtführung gemäss dem Rillenbild so ausgelegt, dass durch unerwünschte Kontaktierungen sich berührender Heizdrahtbereiche nur ein Minimum des gesamten Heizdrahtwiderstands überbrückt wird. Daher ist eine Heizmatte, die sich aus einem Flächenheizmittel bestehend aus mehreren parallel geschalteter Heizelemente zusammensetzt vorteilhaft, indem nach Ausfall eines der Heizelemente beim Schweissvorgang, die anderen Heizelemente weiterhin funktionieren. In Reihenschaltungen wird der elektrische Stromfluss im Flächenheizmittel schon durch Ausfall eines einzigen Heizelements unterbrochen. Des weiteren ist eine Heizdrahtführung in einem Rillenbild vorteilhaft, in welchem bei Berührung von Heizdrahtbereichen nur eine kurze Länge des verlegten Heizdrahts kurzgeschlossen wird. Dies ist in den vorteilhaften, in dieser Schrift beschriebenen Ausführungsformen von Heizelementen der Fall, da der Heizdraht in einer Schar von Rillen in äquidistantem Abstand auf einer oder zwei Hauptflächen einer Trägerplatte zueinander eingelegt wird und in Wendebereichen gewendet wird. Der Kurzschluss tritt daher nur zwischen solchen kurzen, benachbarten Heizdrahtbereichen auf und führt so lediglich zum Ausfall eines kleinen Teil (beispielsweise ein Prozent) der Gesamtheizdrahtlänge und folglich nur zu einer kleinen Reduktion des Ohmschen Gesamtwiderstands des Flächenheizmittels.

Durch Kontrolle der angelegten Spannung und des fliessenden elektrischen Stroms beim Schweissvorgang kann somit eine Qualitätskontolle der vollzogenen Flächenschweissung vorgenommen werden. Dies erlaubt eine raschere Überprüfung der Güte der Flächenschweissung. Bei Ausfall (bspw. infolge Kurzschlusses) eines Heizdrahtbereichs ist der Ohmsche Gesamtwiderstand der Heizmatte, entsprechend der Grösse des ausgefallenen Ohmschen Teilwiderstands des Heizdrahtbereichs, nur geringfügig verkleinert, was bei einem Kurzschluss eines einheitlich geführten Heizdrahts einer bekannten Heizspirale oder Heizmatte (siehe Figuren 1b, 1c und 1d) nicht der Fall ist, hier findet eine bedeutend grössere Verringerung des Ohmschen Widerstands infolge des Kurzschlusses statt.

Zur Herstellung einer ersten Ausbildungform eines Flächenheizmittels werden zwei identisch gearbeitete Heizelemente mit identischen Ohmschen Widerständen zusammengefügt, sodass sich der Ohmsche Gesamtwiderstand des Flächenheizmittels sich aus den Ohmschen Einzelwiderständen der Heizdrähte der beiden Heizelemente zusammensetzt. Diese so gebildete Heizmatte hat ein homogenes Wärmefeld, die beiden Heizdrähte sind identisch gearbeitet und erzeugen bei Stromdurchfluss eine gleichmässige Heizzone oder Heizbereich, in welcher der thermoplastische Kunststoff in einer Schmelzzone verschmilzt. Dies ist keine Notwendigkeit, bei Verwendung unterschiedlicher Heizleistungen der Heizelemente 10', beispielsweise durch Verwendung verschiedener Materialien, Kupfer und Konstantan in den beiden Heizelementen 10', oder bei Verwendung unterschiedlich dicker Heizdrähte 16 oder unterschiedlich langer Heizdrähte 16 der beiden zusammengefügten Heizelemente 10', erhält man eine Heizmatte mit inhomogenen Wärmefeld (nicht gleichmässige Heizzonen). Solche unterschiedliche Heizleistungen kann man beispielswiese mittels verschiedener Rillenbilder 15 erhalten, bei denen die Heizelemente 10' beispielsweise unterschiedlich grosse Rillenabstände auf den Hauptflächen aufweisen. Die Verlegung auf beiden Hauptflächen (Vorder- und Rückseite) oder nur auf einer Hauptfläche ist ebenfall frei wählbar und erhöht den Anwendungsbereich des aus solchen Heizelementen gebildeten Flächenheizmittels bedeutend. So resultiert bei Verlegung des Heizdrahts auf zwei Hauptflächen ein anderes Heiz- und Schmelzverhalten der Heizmatte als bei Verlegung auf nur einer Hauptfläche. Dies kann benutzt werden um beispielsweise zwei Formstücke über diese Flächenschweissbereiche auf den beiden Hauptflächen stumpf miteinander zu verbinden.

Erfindungsgemäss setzt sich das Flächenheizmittel aus mehreren einfachen geometrischen Objekten mit niedriger topologischer Ordnung zusammen. Eine mathematisch präzise Beschreibung der anschaulichen Deformation geometrischer Objekte kann durch deren Abbildung in topologischen Räumen vorgenommen werden. Hierbei spielen die qualitativen Lagebeziehungen der Teile dieser Objekte zueinander eine wesentliche Rolle. Die Heizelemente 10' der ersten Ausführungsform des Flächenheizmittels 18 gemäss Figur 2d sind in der untersten topologischen Ordnung und von grosser Einfachheit. Dies wird daraus ersichtlich, dass der Tragkörper 10 nur eine einfache Platte darstellt, wodurch das Schneiden der Rillen, das Einlegen der Heizdrähte, die Anpassung des fertigen Flächenheizmittels 18 an äussere Formen weder behindert oder erschwert wird. Beispielsweise lässt sich der Heizdraht 16 bei der Herstellung des Heizelements 10' entweder in einer Ebene (auf einer Hauptfläche) oder in mehreren Ebenen (auf beiden Hauptflächen) verlegen. Dies ist mit dem vorliegenden Halbzeug in Form einer Trägerplatte 10 die keine Öffnung aufweist durch die der Heizdraht gewickelt werden muss, sehr einfach. Man beachte aber, dass das aus solchen Heizelementen 10' gebildete Flächenheizmittel 18 sehr wohl eine Öffnung in Form einer verschweissungsfreien Zone 11 aufweist, durch die die Heizdrähte 16 gewickelt sind. Der Heizdraht kann also auf diesem einfachsten topologischen Objekt in Form einer Trägerplatte (topologische Ordnung = null) 10 gemäss dem Rillenbild verlegt werden, ohne dass ihn das Einlegewerkzeug nach jedem Durchwickeln durch eine Öffnung umgreifen muss, wie das beispielsweise zur Herstellung einer ringförmigen Heizmatte (topologische Ordnung = 1) der Fall ist. Auf dieser niedrigen topologischen Ordnung des Halbzeugs beruht die einfache Weiterbearbeitung dieses Halbzeugs, oder anders ausgedrückt, die einfache Herstellung eines Flächenheizmittels 18.

In **Figur 3** ist eine zweite Ausführungsform von Heizelementen 50' (Figur 3a) und eine durch Zusammensetzen von vier solcher Heizelemente 50' gebildete zweite Ausführungsform eines erfindungsgemässen Flächenheizmittels 58 (Figur 3b) mit einer zentralen, kreisförmigen schweissungsfreien Zone 51* zu sehen. Das Flächenheizmittel 58 besteht aus vier symmetrischen Heizelementen 50', sie haben die Form von Viertelkreisbögen mit verschweissungsfreien Zonen 11, sie haben in Zonen geschnittene Rillenbilder 55 und darin eingebettete Heizdrähte 56. Diese Heizelemente 50' bestehen aus elektrisch isolierendem thermoplastischem Kunststoff, sie können eben oder räumlich gekrümmt sein. Die Dicke der Trägerplatten 50, die als Halbzeug zur Herstellung der Heizelemente 50' dienen, ist frei wählbar, als Faustregel ist sie 1,5 bis 5 Mal dicker wie der verwendete Heizdraht 56. Jedes der Heizelemente 50' besitzt, wie auch die erste Ausführungsform in Figur 2, zwei Ansätze 52 mit zwei kreisförmigen Öffnungen 53 und zwei halbkreisförmigen Einformungen 54. In jedem Heizelement 50' ist der Heizdraht 56 einheitlich eingelegt, er besteht aus einem Stück, er ist dünn und daher nicht starr und verläuft entweder in einer Ebene auf der Vorderseite des Heizelements 50' (nur auf einer Hauptfläche) oder in mehreren Ebenen auf der Vorder- und Rückseite des Heizelements 50' (also auf beiden Hauptflächen). An den Enden der einzelnen Rillen 55.1 wird der Heizdraht 56 von einer Rille 55.1 zur nächsten, angrenzenden Rille 55.1 geführt. In diesen Wendebereichen 57 ändert der Heizdraht 56 seine Raumorientierung um zweimal 90°. Der Heizdraht 56 wird schlaufenförmig in die Rillen 55.1 eingelegt. Der zum Verschweissen notwendige elektrische Strom wird den Heizdrähten 56 über die vier Anschlussstellen 59,59', 59" und 59‴ (gebildet aus den halbkreisförmigen Einformungen 54 und dem eingebetteten Heizdraht 56 verschiedener aneinandergrenzender Heizelemente) zugeführt. Es liegen also vier Anschlussstellen 59,59',59",59"' vor, an die eine Spannung angelegt werden kann. Findet dies zwischen den Anschlussstellen 59 und 59" oder 59' und 59‴ statt, so fliesst der elektrische Strom parallel durch je zwei Heizelemente 50'.

Diese zweite Ausführungsform eines Flächenheizmittels 58 unterscheidet sich von den anderen Ausführungsformen durch die Bildung eines Wärmefeldes aus vier Heizelementen 50' zu einer Heizmatte. Die Länge des Heizdrahts 50' zwischen den Anschlussstellen 59 des Flächenheizmittel 58 ist rund halb so lang, wie in der ersten Ausführungsform eines Flächenheizmittels 28. Diese kurzen Heizdrähte haben demgemäss niedrigere (rund halb so hohe) Ohmsche Widerstände, was durch entsprechende Beschaltung für den Flächenschweissvorgang ausgenützt werden kann. Die Anschlüsse können auch hier mit Abstand zueinander angeordnet werden. Die Verwendung mehrerer Heizelemente 50' kann auch bewusst ausgenutzt werden, um bei einer Flächenschweissung mit unterschiedlichen Heizelementen 50' unterschiedliche Verschweissungstemperaturen in verschiedenen Bereichen des Flächenheizmittels 58 zu erzeugen. Dies kann beispielsweise durch Verwendung verschiedener Heizdrahtmaterialien geschehen. Die verschiedenen Ohmschen Widerstände bewirken beim Anlegen einer Spannung in einer Parallelschaltung, dass in den einen eine höhere Joulesche Wärme gebildet wird als in den andern Elementen, wodurch diese Heizzonen oder Heizbereiche der Heizmatte heisser werden und ein inhomogenes Wärmefeld vorliegt. Dies eröffnet neue Schweisstechniken.

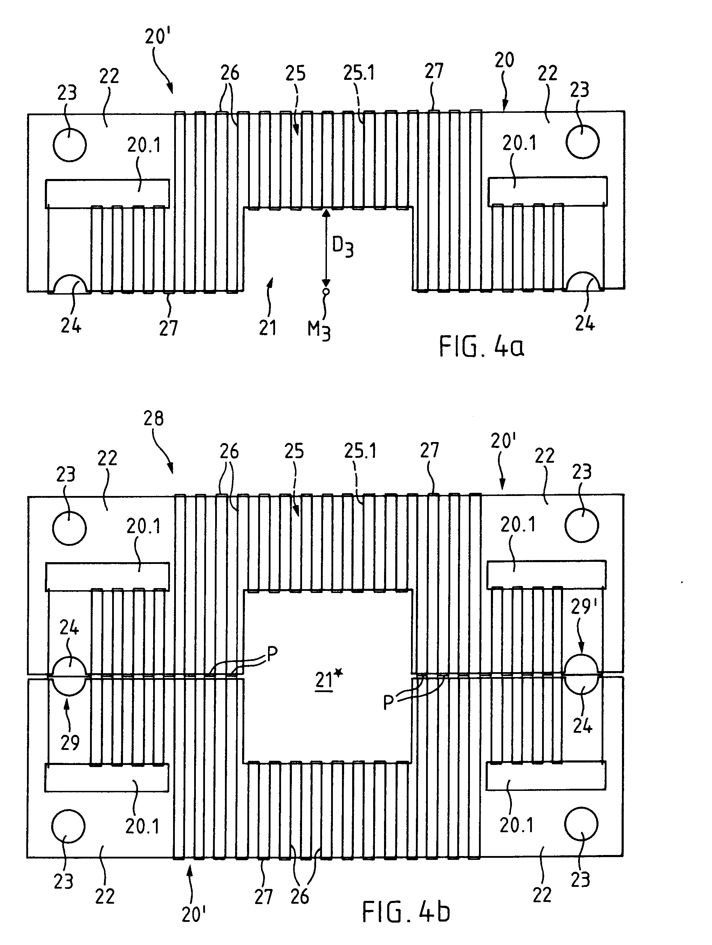

**Figur 4a** zeigt eine dritte bevorzugte Ausführungsform eines Heizelements 20', mit in Zonen geschnittenem Rillenbild 25 und darin eingebettetem Heizdraht 26. Das rechteckige Heizelement 20' weist eine rechteckige verschweissungsfreie Zone 21 mit kürzestem Durchmesser D₃ bezogen auf einen Zentralpunkt M₃ auf. Das Heizelement 20' besteht aus elektrisch isolierendem thermoplastischem Kunststoff, es kann eben oder räumlich gekrümmt sein. Die Dicke der Trägerplatte 20, die als Halbzeug zur Herstellung des Heizelements 20' dient, ist frei wählbar, als Faustregel ist sie 1,5 bis 5 Mal dicker wie der verwendete Heizdraht 26. Das Heizelement 20' besitzt wie die erste Ausführungsform in Figur 2 zwei Ansätze 22 mit zwei kreisförmigen Öffnungen 23 und zwei halbkreisförmigen Einformungen 24. Im Unterschied zur ersten Ausführungsform in Figur 2 wird der Heizdraht 26 nicht nur zwischen zwei die Trägerplatte 20 von aussen begrenzende Seiten nach einem vorgefertigten Rillenbild 25 verlegt, sondern er wird auch über zwei innere rechteckige Öffnungen 20.1 der Trägerplatte 20 gewickelt. Dies erfolgt, um die Menge des verwendeten Heizdrahts 26 möglichst gering zu lassen. Der Heizdraht 26 muss daher nicht bis zur Aussenkante des Halbzeugs gewickelt werden, sondern wird in diesen, prinzipiell frei wählbaren rechteckigen Öffnungen 20.1, in seinem Verlauf gekehrt. Allerdings wird durch diese Massnahme die Herstellung nur dann nicht aufwendiger, wenn keine Umwicklung des Tragkörpers vorgesehen ist. Aber auch für diesen Fall liesse sich eine Mehr-Elemente-Lösung heranziehen, wie das oben schon diskutiert wurde.

Der Heizdraht 26 ist einheitlich eingelegt, er besteht aus einem Stück, ist dünn und nicht starr und verläuft vorteilhafterweise in einer Ebene auf der Vorderseite des Heizelements 20'. Der Heizdraht 26 verläuft gemäss dem Rillenbild 25 in Rillen 25.1, nämlich in einer Schar paralleler und in einer Ebene betrachtet, im gleichen Abstand zueinander angeordneter Vertiefungen. Diese Vertiefungen weisen Drahtnester mit dem Durchmesser des in sie einzulegenden Heizdrahts 26 auf. An den Enden dieser einzelnen Rillen 25.1 wird der Heizdraht 26 von einer Rille zur nächsten, angrenzenden Rille geführt. In diesen Wendebereichen 27 ändert der Heizdraht 26 seine Raumorientierung um zweimal 90°. Wie auch in Figur 2 wird der Heizdraht 26 auf einer Hauptfläche des Heizelements 20' entsprechend dem in einer Ebene angeordneten Rillenbild 25 durch ein passendes Einlegewerkzeug eingelegt, er muss nicht durch die Öffnungen 20' im Tragkörper durchgezogen werden.

Figur 4b zeigt zwei Heizelemente 20' gemäss Figur 4a, die derart zusammengesetzt eine dritte Ausführungsform eines erfindungsgemässen Flächenheizmittels 28 mit einer zentralen, quadratischen schweissungsfreien Zone 21* bilden. Erfindungsgemäss setzt sich das Flächenheizmittel 28 aus mindestens zwei getrennt auf den beiden Heizelementen 20' geführten Heizdrähten 26 zusammen. In der dritten Ausführungsform eines Flächenheizmittels in Figur 4b liegt eine Parallelschaltung vor, zwischen den Anschlussstellen 29,29' (gebildet aus den halbkreisförmige Einformungen 24 und dem eingebetteten Heizdraht 26) fliesst der elektrische Strom durch die identisch gearbeiteten Trägerplatten 20. In der Parallelschaltung gemäss Figur 4b ist der Einzelwiderstand der dünnen Heizdrähte 26 demnach beispielsweise doppelt so hoch wie in vergleichbaren bekannten Heizspiralen und Heizmatten.

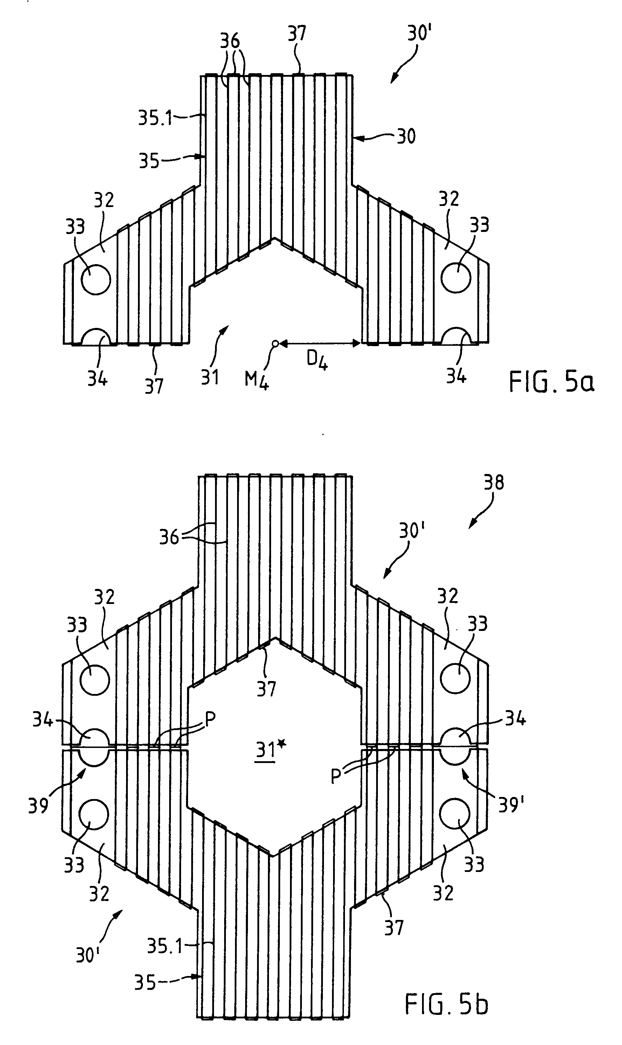

**Figur 5a** zeigt eine vierte bevorzugte Ausführungsform eines Heizelements, mit in Zonen geschnittenem Rillenbild und darin eingebettetem Heizdraht. Die Beschreibung des Heizelements 30' in Figur 5a korrespondiert weitgehend mit denjenigen der ersten und dritten Ausführungsform von Heizelementen gemäss den Figuren 2 und 4. Während das Heizelement 10' eine halbkreisförmige Geometrie und das Heizelement 20' eine rechteckige Geometrie zu Grunde lagen, beruht das Heizelement 30' auf der Geometrie des Polygons. Die verschweissungsfreie Zone 31 weist einen Zentralpunkt M₄ auf und wird von, in dieser vierten Ausführungsform, äquidistant im Abstand des Durchmessers D₄ angeordneten Kanten begrenzt. Die als Halbzeug zur Herstellung des Heizelements 30' dienende Trägerplatte 30 besteht aus elektrisch isolierendem thermoplastischem Kunststoff, sie kann eben oder räumlich gekrümmt sein. Die Dicke der Trägerplatte 30 ist frei wählbar, als Faustregel ist sie 1,5 bis 5 Mal dicker wie der verwendete Heizdraht 36. Das Heizelement 30' besitzt zwei Ansätze 32 mit zwei kreisförmigen Öffnungen 33 und zwei halbkreisförmigen Einformungen 34. Der Heizdraht 36 ist einheitlich eingelegt, er besteht aus einem Stück, er ist dünn und nicht starr und verläuft entweder in einer Ebene auf der Vorderseite des Heizelements 30' oder in mehreren Ebenen auf den beiden Hauptflächen (Vorder- und Rückseite) des Heizelements 30'. Der Heizdraht 36 wird gemäss dem Rillenbild 35 in Rillen 35.1 eingelegt. Er verläuft in einer Schar paralleler und in einer Ebene betrachtet im gleichen Abstand zueinander angeordneter Vertiefungen. Diese Vertiefungen weisen den Durchmesser des in sie einzulegenden Heizdrahts 36 auf. An den Enden dieser einzelnen Rillen 35.1 wird der Heizdraht 36 von einer Rille 35.1 zur nächsten, angrenzenden Rille 35.1 geführt. In diesen Wendebereichen 37 ändert der Heizdraht 36 seine Raumorientierung zweimal um 90°.

**Figur 5b** zeigt zwei Trägerplatten gemäss Figur 5a, die derart zusammengesetzt eine vierte Ausführungsform eines erfindungsgemässen Flächenheizmittel 38 mit einer zentralen, hexagonalen schweissungsfreien Zone 31 bilden. Erfindungsgemäss setzt sich das Flächenheizmittel 38 aus mindestens zwei getrennt auf den beiden Heizelementen 30' geführten Heizdrähten 36 zusammen. Auch die vierte Ausführungsform eines Flächenheizmittels wird über Anschlussstellen 39,39' in Parallelschaltung betrieben. Natürlich lassen sich vom Fachmann bei Kenntnis dieser Erfindung eine Vielzahl von Ausführungsformen von Tragkörperformen und somit Heizelemente für beliebig flächendeckende Flächenheizmittel realisieren. Konzeptionell werden mindestens zwei Heizelemente zusammengefügt, sodass sie ein Flächenheizmittel bilden. So kann man beispielsweise zum Bilden grösser dimensionierte Flächenheizmittel auch vier Heizelemente parallel schalten, wodurch die individuelle Heizdrahtlänge pro verwendetes Heizelement gleich gehalten werden kann. Erfindungsgemäss sind also eine Vielzahl verschiedener Ausführungsformen dieser Erfindung möglich.

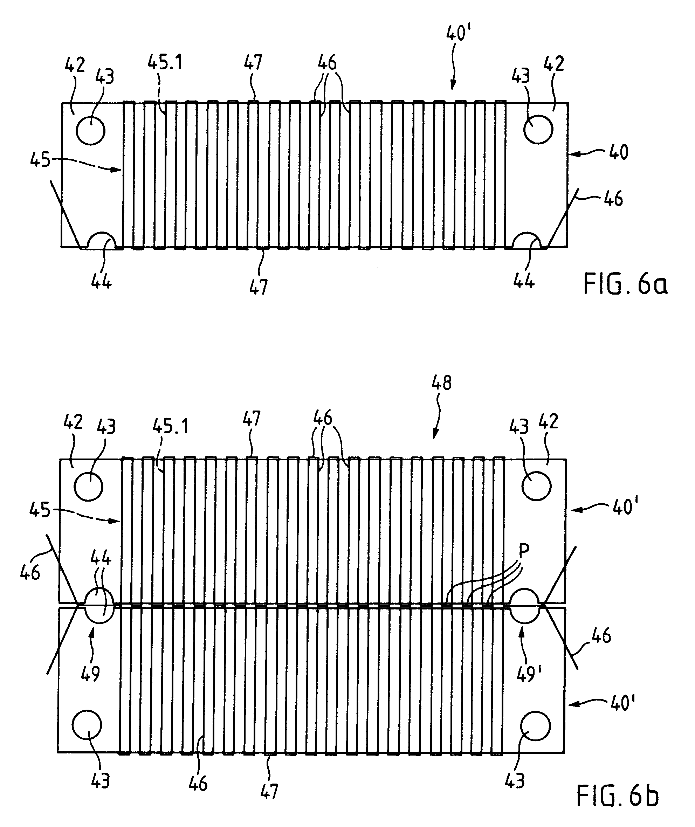

**Figur 6a** zeigt eine fünfte bevorzugte Ausführungsform eines Heizelements 40', mit in Zonen geschnittenem Rillenbild 45 und darin eingebettetem Heizdraht 46. Sie unterscheidet sich durch das Fehlen einer verschweissungsfreien Zone. Der Heizdraht 46 ist einheitlich eingelegt, er besteht aus einem Stück, er ist dünn und nicht starr und verläuft entweder in einer Ebene auf der Vorderseite des Heizelements 40' oder in mehreren Ebenen auf den beiden Hauptflächen (Vorder- und Rückseite) des Heizelements 40'. Er ist in Rillen 45.1 gemäss einem Rillenbild 45 von wohl definierter Tiefe und Ausdehnung eingelegt, er verläuft geordnet, nämlich in einer Schar paralleler und in einer Ebene betrachtet, im gleichen Abstand zueinander angeordneten Vertiefungen. In Wendebereichen 47 an den Enden von Rillen 45.1 wird der Heizdraht 46 geschlauft, sodass der Heizdraht 46 in Bögen von einer Rille 45.1 zur nächsten, angrenzenden Rille 45.1 geführt wird. In diesen Wendebereichen 47 ändert der Heizdraht 46 seine Raumorientierung zweimal um 90°. Wie auch in den Ausführungsformen gemäss den Figuren 2 bis 5 wird der Heizdraht 46 auf dem Heizelement 40' entsprechend dem in einer oder mehreren Ebenen angeordneten Rillenbild 45 durch ein passendes Einlegewerkzeug eingelegt, er muss also nicht durch das Heizelement 40' durchgezogen werden.

**Figur 6b** zeigt zwei Heizelemente 40' gemäss Figur 6a, die derart zusammengesetzt eine fünfte Ausführungsform eines erfindungsgemässen Flächenheizmittel 48 ohne zentrale schweissungsfreier Zone bilden. Erfindungsgemäss setzt sich das Flächenheizmittel 48 aus mindestens zwei getrennt auf den beiden Heizelementen 40' geführten Heizdrähten 46 zusammen. Jeweils zwei halbkreisförmigen Einformungen 44 von je einer der Heizelemente 40' des Flächenheizmittels 48 stehen sich gegenüber und bilden Paare. Elektrische Schaltungen können nun so konstruiert werden, dass Paare von halbkreisförmigen Einformungen 44 von je einer Trägerplatte 40 des Flächenheizmittels 48 in elektrischen Kontakt gebracht werden (Anschlussstellen 49,49').

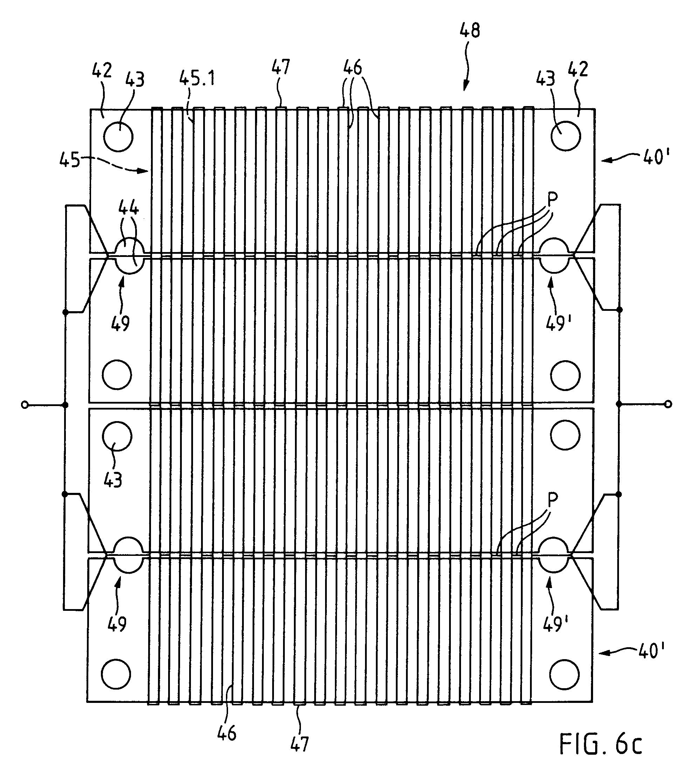

**Figur 6c** zeigt eine Mehrzahl von Heizelementen gemäss Figur 6a, die derart zusammengesetzt eine weitere Ausführungsform eines erfindungsgemässen Flächenheizmittel 48, also einer beliebig grossen Heizmatte zeigen. Erfindungsgemäss setzt sich das Flächenheizmittel 48 aus getrennt auf den Heizelementen 40' geführten Heizdrähten 46 zusammen. Jeweils zwei halbkreisförmige Einformungen 44 von je einer der Heizelemente 40' des Flächenheizmittels 48 stehen sich gegenüber und bilden Paare (Anschlussstellen 49,49').

Elektrische Schaltungen können nun so konstruiert werden, dass ein oder beide Paare von halbkreisförmigen Einformungen 44 von je einer Trägerplatten 40 des Flächenheizmittels 48 in elektrischen Kontakt gebracht werden. An den Kontaktstellen P können Kontakte auftreten, ohne dass die Heizleistung des Einzelements tangiert wird, da bei gleichen Heizelementen an den Kontaktstellen P gleiches elektrisches Potential herrscht. Dabei müssen die einzelnen parallel geschalteten Heizelemente nicht die gleiche Heizleistung aufweisen, sie können verschiedene Ohm'sche Widerstände aufweisen, wodurch dann, bei gezieltem elektrischen Kontakt zwischen den Stellen P eine Verzweigung der Heizleistung stattfindet, da entlang einer Reihe von Kontaktstellen P (wie beim Abgriff an einem Potentiometer) unterschiedlicher Einzelwiederstände unterschiedliche Potentiale entstehen. So wird der Strom an gewissen Kontaktstellen P den Weg über das benachbarte Heizelement suchen, sich also verzweigen. Dieser Effekt wird unterbrochen, sobald durch Erweichung das Trägers die Kontakte an den Stellen P getrennt und der Stromfluss zwischen zwei Elementen unterbrochen wird.

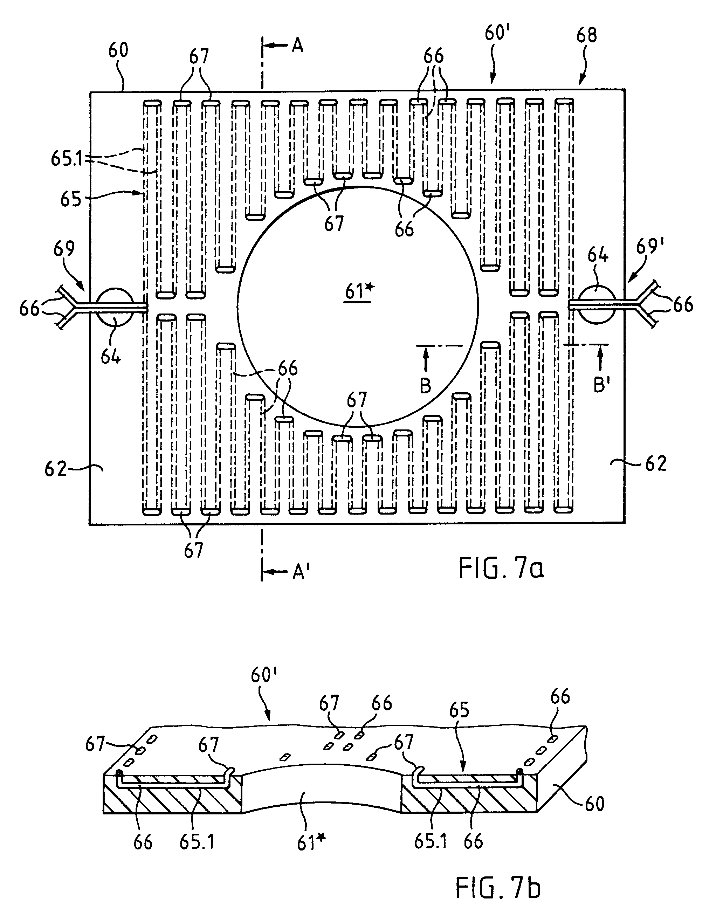

**Figur 7a** zeigt eine sechste bevorzugte Ausführungsform eines Heizelements 60', mit in Zonen geschnittenem Rillenbild 65 und darin eingebettetem Heizdraht 66 und mit einer zentralen, verschweissungsfreien Zone 61*. Diese Ausführungsform unterscheidet sich von den vorherigen Ausführungsformen dadurch, dass hier zwei Heizdrähte 66 in Rillen 65.1 auf einer gemeinsamen Trägerplatte 60 verlegt sind und zwei Heizzonen bilden, in denen in Schweisszonen Formstücke verschweisst werden können. Die topographischen Probleme beim Verlegen vom Heizdraht sind in dieser sechsten Ausführungsform derart gelöst, dass die Heizdrähte 66 auf ein und derselben Seite der Trägerplatte 60 in Wendebereichen 67 gewendet werden. Die Heizdrähte 66 müssen also nicht durch die verschweissungsfreie Zone 61* durchgezogen werden. Diese Ausführungsform unterscheidet sich im weiteren dadurch, dass die Heizdrähte 66 aus der Trägerplatte 60 an die Oberfläche herausragend in Wendebereichen 67 verlaufen. Es sind also nur die Wendebereiche 67 der Heizdrähte 66 des Flächenheizmittels 68 von aussen ersichtlich, die anderen Bereiche des Heizdrahts 66 liegen in den Rillen 65.1. Schliesslich weisen die Heizdrähte 66 keine Kontaktstellen auf.

Ansonsten folgt diese Ausführungsform den Charakteristiken der vorher diskutierten Ausführungsformen gemäss den Figuren 2 bis 6. Das Flächenheizmittel 68 setzt sich somit aus zwei getrennt auf dem Heizelement 60' geführten Heizdrähten 66 zusammen. Elektrische Schaltungen können nun so konstruiert werden, dass Paare von halbkreisförmigen Einformungen 64 des Flächenheizmittels 68 in elektrischen Kontakt gebracht werden (Anschlussstellen 69,69'). Der Heizdraht 66 ist wiederum einheitlich eingelegt, er besteht aus einem Stück, er ist dünn und nicht starr. In Zonen ist er in Rillen 65.1 gemäss einem Rillenbild 65 von wohl definierter Tiefe und Ausdehnung eingelegt, er verläuft geordnet, nämlich in einer Schar paralleler und in einer Ebene betrachtet, im gleichen Abstand zueinander angeordneten Vertiefungen. Durch Gruppen von kleineren und grösseren Drahtabständen können Heizzonen mit verschiedener Energiedichte geschaffen werden. In Wendebereichen 67 an den Enden von Rillen 65.1 ragt der Heizdraht 66 aus dem Trägermaterial 60 heraus, sodass der Heizdraht 66 an der Oberfläche von einer Rille 65.1 zur nächsten, angrenzenden Rille 65.1 geführt wird. Wie auch in den Ausfüh- rungsformen gemäss den Figuren 2 bis 6 wird der Heizdraht 66 auf dem Heizelement 60' entsprechend dem in einer ebenen oder gekrümmten Fläche angeordneten Rillenbild 65 durch ein passendes Einlegewerkzeug eingelegt.

**Figur 7b** zeigt einen perspektivischen Schnitt AA' dieser bevorzugten Ausführungsform gemäss Figur 7a. Die Heizdrähte 66 sind nur teilweise eingebettet, in den Wendebereichen 67 ragen sie aus der Oberfläche der Trägerplatte 60 heraus. Diese Stellen erscheinen nach dem Verschweissen der Rillen wie eine Nähnaht. In dieser Ausführungsform eines Heizelements 60' und Flächenheizmittels 68 wird ein "doppelter" Tragkörper 60 mit zwei getrennten eingelegten Heidrähten 66 verwendet.

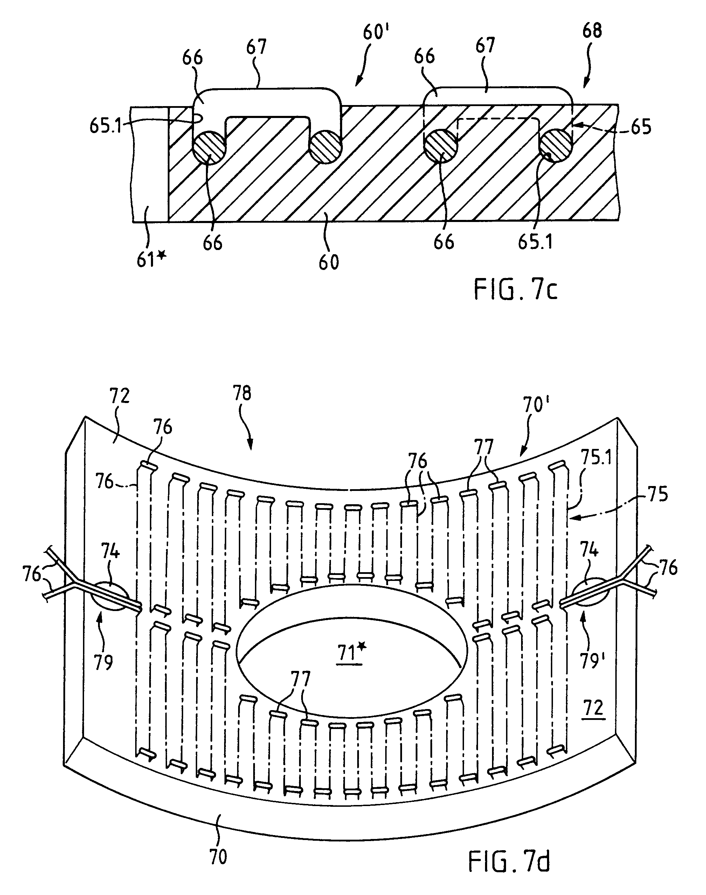

**Figur 7c** zeigt einen vergrösserten Schnitt BB' dieser bevorzugten Ausführungsform gemäss Figur 7a. In diesem Schnitt wird ersichtlich, wie die Heizdrähte 66 vorteilhaftweise in den Wendebereichen 67 flach an die Oberfläche des Heizelements 60' kommen, um dann wieder in die nächste Rille eintauchen. Dieses Verfahrens des Einlegens unterscheidet sich somit von den vorhergehenden Ausführungsformen, wo der Heizdraht 66 geschlauft eingelegt wird.

**Figur 7d** zeigt eine siebte bevorzugte Ausführungsform eines Heizelements 70' und eines Flächenheitmittels 78, nach Einpressen und Einschmelzen der hervorstehenden Wendebereiche 77 der Heizdrähte 76 und mit einer vorgezeichneten verschweissungsfreien Zone 71*. Dieses Flächenheizmittel weist eine komplexe Geometrie auf, es ist als Teilstück eines zu verbindenden (nicht weiter abgebildeten) grösseren Kunststoffrohr-Formteils geformt. Vorteilhafterweise wird hierbei so vorgegangen, dass das Rillenbild 75 bzw. die Heizzonen direkt auf das oder die zu verbindenden Formstücke 70 eingebracht wird. Dies hat den Vorteil, dass die Heizzonen direkt mit dem Formteil verbunden sind und somit ohne Einlegen einer Heizmatte verschweisst werden können. Das Kurzschlussrisiko wird behoben, da die Heizdrähte 76 in genügend grossem Abstand voneinander mäanderförmig auf einer Seite des Formstücks 70 verlaufen.

Dieses Flächenheizmittel kennzeichnet sich dadurch, dass jeder der Heizdrähte 76 gemäss einem Rillenbild 75 in Rillen 75.1 des Formstücks 70 eingelegt ist und dass die Heizdrähte 76 an den Enden dieser Rillen 75.1 in Wendebereichen 77 von einer Rille 75.1 zur nächsten angrenzenden Rille 75.1 geführt sind und dabei die Raumorientierung ändern. Die Rillen 75.1, in denen die Heizdrähte 76 in der Heizzone verlaufen, bestehen aus einer Schar in einer Fläche zueinander angeordneter Vertiefungen von vorbestimmmter Tiefe, die in einer Seite des Formstücks 70 geschnitten sind. Die Heizdrähte 76 kommen in Wendebereichen 77 flach an die Oberfläche des Formstücks 70 heraus, um dann in die nächste Rille 75.1 einzutauchen. Die Heizzone des Flächenheizmittels 78 kann verschiedene Rillenbilder 75 mit verschieden äquidistanten Rillen 75.1 aufweisen, sodass diese Heizzonen unterschiedliche Heizleistungen zum flächenförmigen Verschweissen in Schweisszonen aufweisen. Die Enden der Heizdrähte 76 sind an Ansätzen 72 über Einformungen 74 an Anschlussstellen 79,79' elektrisch kontaktierbar.

Erfindungsgemäss ist auch diese Ausführungsform kein einheitlich hergestelltes, also ein definitiv in nur einer bestimmten Ausführungsform zu verwendendes Verbindungsformstück, es kann eine beliebige Fläche eines thermoplastischen Formstücks sein. Hieraus resultiert eine grosse Freiheit bei der Wahl der Zusammensetzung von Formstücken zur Bildung einer unter Umständen Vielzahl unterschiedlicher Verbindungsformstücke aus elementaren Formstücken und Flächenheizmitteln. Natürlich lassen sich auch Flächenheizmittel ohne zentrale verschweissungsfreien Zone 71* verwenden, auch lassen sich Kombinationen und Zusammensetzungen mit anderen Ausführungsformen von Flächenheizmitteln bewerkstelligen.

## Patentansprüche

1. Flächenheizmittel (18,78) in thermoplastischem Kunststoff zum Herstellen von flächenförmigen Schweissverbindungen zwischen Formstücken durch Umsetzung von elektrischem Strom in Joulesche Wärme in einem oder mehreren eingebetteten Heizdrähten (16,76), mit Zonen von eingearbeiteten Rillen (15.1,75.1) in welche der oder die Heizdrähte (16,76) eingebettet ist/sind, wodurch Heizzonen im Flächenheizmittel (18,78) ausgebildet sind und mit Anschlussstellen (19,79) für elektrischen Strom durch diese ein oder mehrere Heizdrähte (16,76) des Flächenheizmittels (18,78).

2. Flächenheizmittel gemäss Anspruch 1, **dadurch gekennzeichnet,** dass sich das Flächenheizmittel (16) aus einem oder mehreren Heizelementen (10') aus einem oder mehreren Tragkörpern (10) zusammensetzt und eine Heizmatte bildet.

3. Flächenheizmittel gemäss Anspruch 2, dadurch gekennzeichnet, dass jeder der Heizdrähte (16) gemäss einem Rillenbild (15) in Rillen (15.1) der Heizelemente (10') eingelegt ist und dass der Heizdraht (16) an den Enden dieser Rillen (15.1) in Wendebereichen (17) von einer Rille (15.1) zur nächsten angrenzenden Rille (15.1) geführt ist und dabei seine Raumorientierung ändert.

4. Flächenheizmittel gemäss Anspruch 3, dadurch gekennzeichnet, dass Heizdrähte (66) an Enden von Rillen (65.1) in Wendebereichen (67) flach an die Oberfläche eines Heizelements (60') kommen, um dann in die nächste Rille (65.1) einzutauchen.

5. Flächenheizmittel gemäss einem der Ansprüche 3 oder 4, dadurch gekennzeichnet, dass durch Verschaltung der Heizelemente (10') der elektrische Strom in den Heizdrähten (16) in Reihen- oder Parallelschaltungen und in gemischten Schaltungen (Reihen- und Parallelschaltungen) fliessen kann, und dass die Ohmschen Teilwiderstände der Heizdrähte (16) der Heizelemente (10') sich zu Ohmschen Gesamtwiderständen von Flächenheizmitteln (18) zusammensetzen.

6. Flächenheizmittel gemäss einem der Ansprüche 3 bis 5, dadurch gekennzeichnet, dass die Rillen (15.1) in denen der Heizdraht (16) in der Heizzone verläuft, aus einer Schar in einer Fläche zueinander angeordneter Vertiefungen von vorbestimmmter Tiefe bestehen, die in einer Seite auf einer Hauptfläche oder in beiden Seiten der Hauptflächen von Trägerplatten (10) geschnitten sind.

7. Flächenheizmittel gemäss einem der Ansprüche 3 bis 6, dadurch gekennzeichnet, dass die Heizdrähte (16) des Flächenheizmittels (18) in derart kurzen Heizdrahtbereichen gemäss ihrer Rillenbilder (15) in äquidistanten Rillen (15.1) einer Ebene geführt sind, dass ein Kurzschluss beim Flächenschweissvorgang zwischen solchen in äquidistanten Rillen (15.1) einer Ebene geführten Heizdrahtbereichen nur ein Minimum des gesamten Heizdrahtwiderstands überbrückt.

8. Flächenheizmittel gemäss einem der Ansprüche 3 bis 7, dadurch gekennzeichnet, dass die Heizelemente (10') des Flächenheizmittels (18) verschiedene Rillenbilder (15) mit verschieden äquidistanten Rillen (15.1) aufweisen und dass diese Heizelemente (10') unterschiedliche Heizleistungen zum flächenförmigen Verschweissen in Schweisszonen aufweisen.

9. Flächenheizmittel nach Anspruch 8, dadurch gekennzeichnet, dass durch Parallelschaltung und gegenseitige Lage von Heizelementen, welche die Berührung von Kontaktstellen (P) gleichen elektrischen Potentials erlaubt, zwischen Heizelementen (10') eine Heizleistungsverzweigung stattfinden kann.

10. Flächenheizmittel gemäss einem der Ansprüche 3 bis 8, dadurch gekennzeichnet, dass die Flächenheizmittel (18) zentrale, verschweissungsfreie Zonen (11*) unterschiedlicher Geometrie aufweisen und dass sie Flächenschweissbereiche für die vollflächige Verschweissung von Formstücken mit Flächenheizmitteln (18) aufweisen, wobei elektrisch leitende Berührungen von Heizelementen an Kontaktstellen (P) gleiches elektrisches Potential aufweisen.

11. Flächenheizmittel gemäss einem der Ansprüche 3-8,10 dadurch gekennzeichnet, dass die Enden des Heizdrahts (16) eines jeden Heizelements (10') an Ansätzen (12) über Einformungen (14) an Anschlussstellen (19,19') elektrisch kontaktierbar sind.

12. Flächenheizmittel gemäss den Ansprüchen 3 bis 10, dadurch gekennzeichnet, dass elektrischer Strom zwischen den Heizelementen (10') in deren Heizdrähten (16) über aneinanderstossende Einformungen (14) verschiedener Heizelemente (10') fliessen kann.

13. Flächenheizmittel gemäss Anspruch 1, **dadurch gekennzeichnet,** dass sich das Flächenheizmittel (16) aus einem Heizelement (70') in einem Formstück (70) zusammensetzt.

14. Flächenheizmittel gemäss Anspruch 13, dadurch gekennzeichnet, dass die Rillen (75.1) in denen die Heizdrähte (76) in der Heizzone verlaufen, aus einer Schar in einer Fläche zueinander angeordneter Vertiefungen von vorbestimmmter Tiefe bestehen, die in einer Seite des Formstücks (70) geschnitten sind, dass die Heizdrähte (76) in Wendebereichen (77) flach an die Oberfläche des Formstücks (70) kommen, ihre Orientierung ändern, um dann in die nächste Rille (75.1) einzutauchen.

15. Flächenheizmittel gemäss einem der Ansprüche 13 oder 14, dadurch gekennzeichnet, dass die Heizzone des Flächenheizmittels (78) verschiedene Rillenbilder (75) mit verschieden äquidistanten Rillen (75.1) aufweisen und dass diese Heizzonen unterschiedliche Heizleistungen zum flächenförmigen Verschweissen in Schweisszonen aufweisen.

16. Flächenheizmittel gemäss einem der Ansprüche 13 bis 15, dadurch gekennzeichnet, dass die Enden der Heizdrähte (76) an Ansätzen (72) über Einformungen (74) an Anschlussstellen (79,79') elektrisch kontaktierbar sind.

17. Verfahren zur Herstellung eines Flächenheizmittels (18,78) in thermoplastischem Kunststoff gemäss Anspruch 1, **dadurch gekennzeich****net,** dass Rillen (15.1,75.1) in Zonen eingearbeitet werden, dass ein oder mehrere Heizdrähte (16,76) in diese Rillen (15.1,75.1) eingebettet werden, wodurch Heizzonen im Flächenheizmittels (18,78) ausbilden werden und dass elektrischer Strom über Anschlussstellen (19,79) durch ein oder mehrere Heizdrähte (16,76) des Flächenheizmittels (18,78) geführt wird.

18. Verfahren zur Herstellung eines Flächenheizmittels gemäss Anspruch 17, dadurch gekennzeichnet, dass das Flächenheizmittel (18) aus einem oder mehreren miteinander elektrisch kontaktierbaren Heizelementen (16) zusammengesetzt wird, um so eine Heizmatte zu bilden, wobei elektrischer Strom durch mindestens zwei Heizdrähte (16) geführt wird.

19. Verfahren gemäss Anspruch 18, dadurch gekennzeichnet, dass die Heizdrähte (16) von Heizelementen (10') in Flächenheizmitteln (18) bezüglich Durchmesser und Länge unterschiedlich gearbeitet sind und/oder aus unterschiedlichen elektrisch leitenden Materialien bestehen und verschiedene Ohmsche Teilwiderstände besitzen, derart, dass bei einer Flächenschweissung mit solch unterschiedlichen Heizelementen (10') von Flächenheizmitteln (18) unterschiedliche Heizleistungen in verschiedenen Heizzonen der Flächenheizmittel 30 (18) erzeugt werden.

20. Verfahren gemäss Anspruch 18, dadurch gekennzeichnet, dass durch die Zusammensetzung von Flächenheizmitteln (18) zentrale, verschweissungsfreie Zonen (11*) gebildet werden und dass die Flächenheizmittel (18) Flächenschweissbereiche für die vollflächige Verschweissung von beliebigen Formstücken aufweisen.

21. Verfahren zur Herstellung eines Flächenheizmittels gemäss Anspruch 17, **dadurch gekennzeichnet,** dass das Flächenheizmittel (78) in einem Fomrstück (70) hergestellt wird, dass Rillen (75.1) gemäss einem Rillenbild (75) als eine Schar in einer Fläche zueinander angeordneter Vertiefungen von vorbestimmter Tiefe in das Formstück (70) geschnitten werden, dass jeder der Heizdrähte (76) in die Rillen (75.1) des Formstücks (70) eingelegt werden, dass die Heizdrähte (76) an den Enden dieser Rillen (75.1) in Wendebereichen (77) von einer Rille (75.1) zur nächsten angrenzenden Rille (75.1) geführt werden und dabei flach an die Oberfläche des Formstücks (70) kommen und die Raumorientierung ändern.

22. Verfahren gemäss Anspruch 21, dadurch gekennzeichnet, dass in die Heizzone des Flächenheizmittels (78) verschiedene Rillenbilder (75) mit verschieden äquidistanten Rillen (75.1) eingearbeitet werden und dass in diesen Heizzonen unterschiedliche Heizleistungen zum flächenförmigen Verschweissen in Schweisszonen generiert werden.
